# EUROPEAN PATENT SPECIFICATION

(11) **EP 3 297 243 B1**
(45) Date of publication and mention of the grant of the patent: **07.07.2021**
(21) Application number: 16792021.4
(22) Date of filing: 18.04.2016
(51) Int. Cl.: H04L 29/06

(54) **TRUSTED LOGIN METHOD AND DEVICE**
VERFAHREN UND VORRICHTUNG ZUM SICHEREN ANMELDEN
PROCÉDÉ ET DISPOSITIF DE CONNEXION SÉCURISÉE

(30) Priority: 12.05.2015 CN 201510239796
(43) Date of publication of application: 21.03.2018
(73) Proprietor: Advanced New Technologies Co., Ltd., George Town, Grand Cayman KY1-9008 (KY)
(72) Inventor: ZHOU, Zhizhang, Hangzhou 310099 (CN)
(74) Representative: Fish & Richardson P.C.
(86) International application number: PCT/CN2016/079555
(87) International publication number: WO 2016/180171

(56) References cited:
- WO-A1-2015/010558
- CN-A- 102 622 270
- CN-A- 104 268 457
- CN-A- 104 348 777
- KR-A- 20040 066 394
- US-A1- 2003 233 329
- US-A1- 2014 082 715

## Description

### Technical Field

The present application relates to network technologies, and in particular, to a trusted login method and apparatus.

### Background Art

Trusted login may also be referred to as auto login between two applications. For example, a user goes shopping by logging into a shopping website, and is redirected to a payment website for making a payment; in this case, the payment can be made directly without the need to enter login information of the payment website. This is a trusted login from the shopping website to the payment website, that is, the payment website trusts a user who has already logged into the shopping website, and therefore the user can directly operate on the payment website without logging into the payment website again.

In the related technology, a manner of trusted login between two applications may be as follows: after logging into an application A, a user makes a digital signature in the application A and adds the signature to a website link address of an application B to serve as one of the parameters in the link address, where the address carrying the signature may be referred to as a trusted login website. When the user clicks the trusted login website to access the application B, the application B learns that the user has logged into the application A after checking the signature, and then sets that the user also logs into the application B. In this manner, if the trusted login website is randomly copied, for example, copied to another terminal, the application B can still be accessed, causing a security risk.

Patent Publication US 2014/082715 A1 to Grajek et al., published 20 March 2014, discloses methods for authentication of mobile device applications using a native, independent browser using a single-sign-on system. An authentication module within the mobile application can direct the mobile device's native browser to a URL to initiate authentication with an authentication appliance. The mobile browser can receive and store a browser-accessible token to indicate previous authentication performed by the user. The mobile application can receive from the application appliance and store a client application ID token that may be presented to network services for access. A second mobile device application may direct the same browser to the authentication appliance. The authentication appliance may inspect the persistent browser-accessible token and issue a second client application ID identity to the second application without collecting additional authentication information, or collecting additional authentication information that is different from the first authentication information.

Patent Publications CN 104 348 777 A to Tencent Tech Shenzhen Co Ltd., published 11 February 2015, and corresponding US 2016/269396 A1, disclose a method for controlling access to a third-party server by a mobile terminal. The method comprises acquiring, at the mobile terminal from a first-party server, login authorization information using which a user of the mobile terminal has logged in the first-party server through a client-side application corresponding to the first-party server. The login authorization information includes a logged-in account. The method further comprises transmitting, to the third-party server, a login request, which includes the login authorization information that is to be verified; and receiving authorization for the user to log in the third-party server using the logged-in account included in the verified login authorization information.

Patent Publication US 2003/0233329 A1 describes a method and system for providing content services to mobile devices. The method and system should provide these content services to the mobile devices while ensuring user privacy. The method and system should also allow one or more content providers that provide the content services to collect payment for the use of the content services. In one example, a user makes a request for content from an affiliated content provider (Affiliated Content Provider A). This request travels from the wireless device (where it is a request over a radio frequency) thru one or more wireless infrastructure devices until it arrives as a Hypertext Transfer Protocol (HTTP) request over an Ethernet to a proxy server. The proxy server then requests the source Internet Protocol (IP) address of the wireless device that sent the request. The proxy server then sends the IP address to an identity agent having a very reliable database and is given a user identifier (or UID) to that IP address from the identity agent in return. The proxy server then looks at the HTTP request to determine IP address (or service ID) for the content provider. Using an algorithm, a unique content provider-specific identifier (or subnym) is calculated as the UID and the service ID (or, if it was already calculated, it can be looked up in a table where the previous calculation was recorded). The subnym is attached to the HTTP request by means of inserting an additional header (x-access-subnym) to the request. The HTTP request is forwarded to the affiliated content provider with the appended subnym. The affiliated content provider uses the subnym to determine the identity of the user.

### Summary of the Invention

Accordingly, the present application provides a trusted login method and system according to the independent claims 1 and 5, to improve the security of trusted login.

Dependent claims constitute embodiments of the invention.

The embodiments of the following description which are not covered by the appended claims are considered as not being part of the present invention.

The trusted login method and system provided in the present application transmit a login state between servers of a first application and a second application that have a trusted login association relation, such that the servers can learn that the user has logged into the associated application according to the login state, thus establishing a trusted login between the associated applications. This manner implements the trusted login relying on mutual notifications between servers, and can further improve the security of trusted login compared with the conventional manner of transmitting login information between client terminals.

### Brief Description of the Drawings

FIG 1 is a flowchart of a trusted login method according to an exemplary embodiment of the present application;
FIG 2 is a flowchart of another trusted login method according to an exemplary embodiment of the present application;
FIG 3 is a structural diagram of a trusted login apparatus according to an exemplary embodiment of the present application;
FIG 4 is a structural diagram of another trusted login apparatus according to an exemplary embodiment of the present application; and
FIG 5 is a structural diagram of another trusted login apparatus according to an exemplary embodiment of the present application.

### Detailed Description

The exemplary embodiments will be described in detail herein, and examples thereof are represented in the accompanying drawings. When the following description involves the accompanying drawings, identical numbers in different drawings represent identical or similar elements, unless otherwise specified. Implementations described in the following exemplary embodiments do not represent all implementations complying with the present application. On the contrary, they are merely examples of apparatuses and methods consistent with some aspects of the present application as detailed in the appended claims.

The trusted login is an auto login manner that facilitates seamless switching of a user between different applications. For example, after a user logs into an application A, the user also has an access right to an application B, where the application B trusts the user that already logs into the application A. Generally, users of the application A and the application B that allow trusted login is the same user (for example, the user registers with the application A and the application B by using a same account), or users of the two applications have a binding relation (for example, users register with the two applications by using different accounts, but have a binding relation). In an actual application, for example, a manner of redirection to a payment website during payment of a shopping website is an implementation of trusted login.

The trusted login method and apparatus in the embodiments of the present application are used for implementing trusted login between two applications, and the method will implement more secure trusted login. The trusted login between two applications, i.e., a shopping application and a payment application, is taken as an example, wherein the shopping application may be referred to as a first application and the payment application may be referred to as a second application. By using a mode employing a Browser/Server, a user may open a web address of a shopping website through a browser on a terminal (such as a computer or a smart phone) to access the shopping application, the shopping website accessed on the terminal is a client terminal of the shopping application, and content of the application is transmitted by a back-end shopping application server to the client terminal for parsing and displaying.

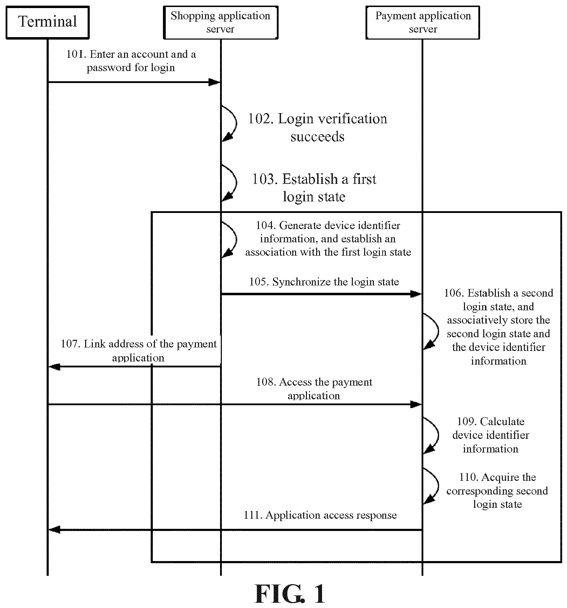

Referring to the example shown in FIG 1, in 101, a user enters an account and a password on a terminal to log into a shopping application; in 102, a server of the shopping application verifies login information such as the account and the password. In this embodiment, it is assumed that the verification is successful. In this case, in 103, the server establishes a first login state, where the first login state represents that "the user corresponding to the account and the password logs into the shopping application on the terminal, and the login is successful". The login state is the recorded login information, which, for example, may include: user information (account), login duration, an environment of the login device (for example, browser version, terminal model, terminal IP address, MAC address, SIM card number of a mobile phone, and so on), and the like. In other words, after the user successfully logs into the application, a server of the application may record some information about the login to the application, and the information is the login state.

In the trusted login method according to the embodiment of the present application, transmission of the login state between the server of the shopping application and the server of the payment application shown in FIG. 1 is depicted. Taking redirection from the web link of the shopping application to the payment application as an example, in such a trusted login process from the shopping application to the payment application, the shopping application is associated with the payment application (where the association allows trusted login). The shopping application may be referred to as an associated application of the payment application, and the payment application may also be referred to as an associated application of the shopping application.

Continuing with FIG 1, the login state established by the server of the shopping application for the user in 103 may be referred to as a first login state (where the "first" is only used for distinguishing the login state from other login states below). In 104, the server of the shopping application may acquire device identifier information of a user login device, and establish an association relation between the device identifier information and the first login state. The device identifier information may be used for uniquely identifying a terminal device on which the user logs into the shopping application. For example, the device identifier information may be information that is directly acquired by the server of the shopping application and can identify the device; or the device identifier information may also be calculated by the server of the shopping application according to some information. For example, as shown in 104 in FIG. 1, an ID of a terminal device may be calculated according to information such as the IP of the terminal, MAC, and process ID (a process accessing the application), to serve as the device identifier information. For example, digest information may be calculated according to the foregoing information by using an MD5 algorithm. Different terminal devices generally have different IP information and MAC information, and therefore, the calculated device identifier information is also different, so that the device identifier information uniquely identifies a login device.

In 105, the server of the shopping application may send both the device identifier information and the first login state to the server of the payment application. For example, when the user needs to be redirected from the shopping application to the payment application, the server of the shopping application may send the device identifier information and the first login state to the server of the payment application. A trusted login process needs to be performed in the embodiment of the present application, that is, once the user logs into the shopping application, the user can directly access the payment application without login. Therefore, after establishing the first login state of the user, the server of the shopping application may notify the server of the payment application, such that the server of the payment application learns that the user has logged into the shopping application, and establishes a login state of the user in the server of the payment application accordingly, which is equivalent to determining that the user already can log into the payment application. Even though the user actually has not yet logged into the payment application at this time, the payment application already determines that the user can log into the payment application.

It should be noted that, in the login state synchronization process in 105, the shopping application mainly notifies the payment application that the user has already logged into the shopping application. Specific content of information transmitted from the server of the shopping application to the server of the payment application may be set flexibly, provided that the foregoing objective can be achieved. For example, information of the synchronized first login state includes: the login state is true, which is used for representing "already logged in", and for another example, may further include terminal information such as a mobile phone model and a browser type. That is, the information included in the first login state transmitted from the server of the shopping application to the server of the payment application may be not exactly the same as the information of the first login state recorded by the server of the shopping application, and the server of the payment application should be at least notified of the state of "already logged in", such that the server of the payment application learns that the user has already logged into the shopping application.

In addition, as the payment application is redirected from the shopping application, the shopping application can know an address of the server of the payment application having a trusted login association thereto, and synchronize the first login state to the address.

In 106, the server of the payment application may establish a second login state of the user in the local payment application (that is, the second application) according to the first login state, that is, record information indicating that the user has already logged into the server of the payment application, e.g., information such as the user account, mobile phone model, browser type, and so on; and establish a corresponding relation between the second login state and the device identifier information, and store the corresponding relation.

In 107, as the user may be redirected from the shopping application to the payment application, the server of the shopping application may return a link address of the payment application to the terminal, for example, a URL of the payment website. In the embodiment of the present application, the server of the shopping application may not need to add a signature to the link address URL of the payment application. In 108, the user may click the link address to access the payment application.

In 108, after receiving an application access request sent by the user, the server of the payment application will calculate device identifier information, and the calculation method is the same as the method used by the server of the shopping application. For example, the server of the payment application calculates the device identifier information according to the IP address and the MAC address of the terminal device, and so on, and checks whether the calculated device identifier information is stored in the server of the payment application. Assuming that a same user is redirected from the shopping application to the payment application on a same terminal, the device identifier information calculated by the server of the payment application in 108 is the same as the device identifier information calculated by the server of the shopping application in 104, and the server of the payment application can find the device identifier information stored in itself and the corresponding second login state.

If the server of the payment application stores the second login state corresponding to the application access request, the server of the payment application may determine that the user has already logged into the associated application thereof, i.e., the shopping application; the server of the payment application can trust the user accordingly, allow the access from the user, and return an application access response to the user in 111, for example, feeding content of the payment application back to the user terminal.

Assuming such a situation, for example, a manner of copying a trusted login website is still performed, a user originally logs into and accesses a shopping application on a terminal z1, and later copies a trusted login website (the website refers to a link address for redirection from the website of the shopping application to the payment application) of a payment application to a terminal z2, and wants to access the payment application on the terminal z2. According to a conventional manner, after verifying a signature in the trusted login website, the server of the payment application can allow the user to access the payment application. However, in this embodiment, the server of the payment application employs the trusted login method in the present application, that is, instead of verification through the signature (or there is no signature at all in the link), device identifier information corresponding to the terminal z2 is calculated. According to the method described above, the server of the payment application stores device identifier information of the terminal z1 and a corresponding login state, but does not store the device identifier information corresponding the terminal z2 and the corresponding login state; in this case, the server of the payment application may reject an application access request initiated by the user from the terminal z2, thus preventing arbitrary transmission of the login state between different terminals, and improving the security of the application access.

As can be seen from the foregoing description, transmission of the login state (for example, the payment application learns a login state of the user in the shopping application) is achieved through the front end conventionally. For example, the user may click an application redirection link on a browser of the front-end terminal to trigger the transmission (a login state signature of the shopping application is added to the link). Consequently, it is easy to copy the link address arbitrarily, and the server side of the payment application is incapable of recognition and control. However, in the embodiment of the present application, the front-end transmission of the login state is transformed to back-end synchronization, that is, login state synchronization between the server of the shopping application and the server of the payment application, which is invisible to the user at the front end. The trusted login process executed between back-end servers makes the trusted login process invisible. Through login state synchronization between servers, the server of the payment application learns that the user logs into the shopping application, and builds trust on the user at the same time. Moreover, the server of the payment application may further control and prevent arbitrary copying between different terminals according to the obtained device identifier information of the login state synchronized between the servers, thus improving the security of trusted login.

In another example, the trusted login generally may require a same user to access an associated application on a same terminal in a trusted auto login manner. Therefore, during generation of device identifier information, the device identifier information may be generated according to device information and login information. For example, the device information includes: an IP address, a MAC address, a process ID, and the like of the device. For example, the login information includes: an account, a password, and the like of the user. If the user logs in by using different account information, different device identifier information is calculated. Therefore, the device identifier information can ensure that the terminal and the user are the same.

In another example, another possible situation in actual use may be that between two associated applications of trusted login, it is possible that a valid time of one application expires while the other application cannot sense the expiration and continues the access. For example, some applications are under the control of a valid time. Assuming a valid time of the shopping application is 30 minutes, the login state of the user in the application expires after 30 minutes, and the user will log into the application again. In this case, during trusted login, the server of the payment application also needs to query again whether the current login state on the shopping application side is valid, and the payment application executes the trusted login only when the login state is still valid and the login state of the payment application itself is also valid.

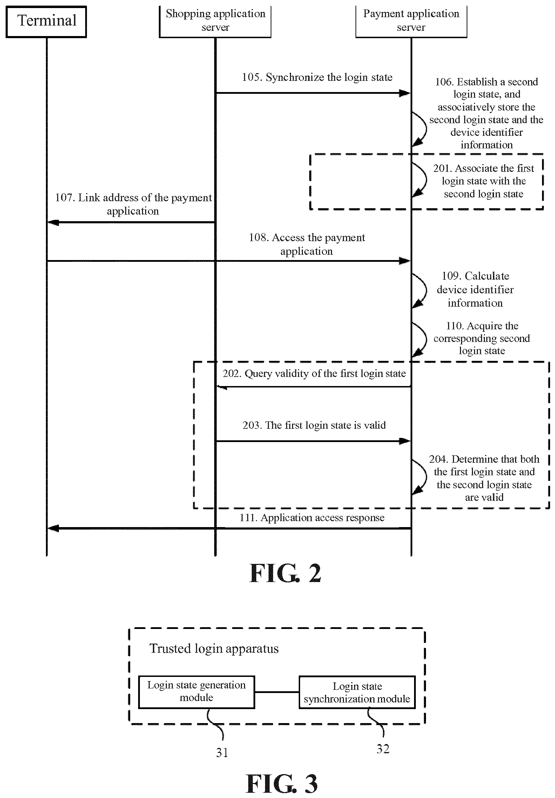

To achieve the foregoing objective, in the process shown in FIG. 2 (in which 101 to 104 are omitted compared with FIG. 1), after establishing the second login state of the user locally, the server of the payment application may further execute 201, that is, establish a corresponding relation between the first login state and the second login state. For example, the two login states both correspond to the foregoing device identifier information, and the corresponding first login state and second login state can be found according to the device identifier information. For another example, when synchronizing the login state in 105, the server of the shopping application may randomly generate a login state ID (where the generation method and specific ID form are not limited). The login state ID may be used for identifying the first login state and the second login state having an association relation, that is, the server of the payment application may enable both the first login state and the second login state to correspond to the login state ID, and the corresponding first login state and second login state can be found according to the login state ID.

After receiving an application access request and acquiring the corresponding second login state, the server of the payment application may find the first login state corresponding to the second login state according to the record of the corresponding relation, and accordingly learn that the first login state is sent by the server of the shopping application (an address of a source device may be recorded when the synchronized first login state is received). The server of the payment application may query the validity of the first login state from the server of the shopping application in 202.

On the server side of the shopping application, there may be multiple manners of judging the validity of the first login state. For example, the server may set identification information of the validity of the login state. For example, if a recorded state is true, it indicates that the login state is currently valid, and if the recorded state is false, it indicates that the login state has become invalid. The server may query the validity of the login state according to the identification information. For another example, the server may record a valid time threshold, for example, 30 minutes, and when the server of the payment application queries the login state, the server compares login duration with the valid time threshold, and determines that the login state is invalid if the login duration exceeds or reaches 30 minutes.

The server of the shopping application may feed that the first login state is valid back to the server of the payment application in 203; moreover, the server of the payment application may return an application access response to the terminal in 111 [p. 9, 1. 21-22; FIG. 2, 111] after it is determined that the first login state and the second login state are both valid (the validity judgment manner of the second login state is the same as that of the first login state). It can be seen that an association is also established between login states of associated applications, so as to facilitate a tracking process of a tracked user, and grasp an expiration time of the login state.

FIG 3 shows a trusted login apparatus. The apparatus may be applied to a shopping application server, such that the shopping application server can execute the foregoing trusted login method. As shown in FIG 3, the apparatus may include: a login state generation module 31 and a login state synchronization module 32, wherein
the login state generation module 31 is configured to acquire device identifier information of a user login device after a first login state of a user in a first application is established, and associate the device identifier information with the first login state; and
the login state synchronization module 32 is configured to send the device identifier information and the first login state to a server of a second application, the second application being a trusted login application associated with the first application, such that the server establishes a second login state of the user in the second application according to the first login state, and associates the device identifier information with the second login state.

Further, when acquiring the device identifier information of the user login device, the login state generation module 31 is specifically configured to: generate the device identifier information according to device information and login information.

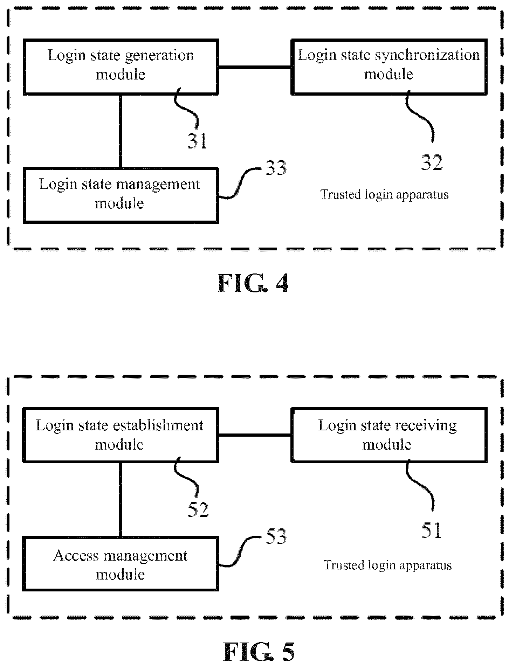

Referring to the example shown in FIG 4, the apparatus may further include: a login state management module 33 configured to receive a validity query request for the first login state sent by the server, and feed validity of the first login state back to the server.

FIG 5 shows a trusted login apparatus. The apparatus may be applied to, for example, a payment application server, such that the payment application server can execute the foregoing trusted login method. As shown in FIG 5, the apparatus may include: a login state receiving module 51, a login state establishment module 52, and an access management module 53, wherein
the login state receiving module 51 is configured to receive a first login state and device identifier information sent by a server of a first application, the first application being a trusted login application associated with a second application, the first login state representing that a user logs into the first application, and the device identifier information being used for representing a login device on which the user logs into the first application;
the login state establishment module 52 is configured to establish a second login state of the user in the second application according to the first login state, and associate and store the device identifier information and the second login state; and
the access management module 53 is configured to, upon receipt of an application access request for the second application, return an application access response if it is determined that identifier information of a device sending the application access request and a corresponding second login state have been stored.

Further, the login state establishment module 52 is further configured to: establish a corresponding relation between the first login state and the second login state after establishing the second login state of the user in the second application; and
the access management module 53 is further configured to: after it is determined that the identifier information of the device sending the application access request and the corresponding second login state have been stored, and before returning the application access response, send a validity query request for the first login state to the server, and determine that the first login state and the second login state are valid.

Described above are merely preferred embodiments of the present application, which are not intended to limit the present application. The scope of the invention is defined in the claims.

## Claims

1. A trusted login method comprising:
establishing (103), by a server of a first application, a first login state of a user in the first application;
obtaining, by the server of the first application, device identifier information of the user login device after the first login state has been established, the device identifier information uniquely identifying the user login device, wherein the first login state is recorded login information that represents that the user has logged into the first application successfully, and associating the device identifier information with the first login state by the server of the first application;
determining, by the server of the first application, a need for redirection from the first application to a second application;
sending (105), by the server of the first application, the device identifier information and the first login state, by the server of the first application, to a server of the second application;
receiving, by the server of the second application, the first login state and the device identifier information sent (105) by the server of the first application, the first application being a trusted login application associated with the second application, wherein the second application is a trusting login application that trusts the first application in that after a respective user logs into the first application, the respective user can access the second application;
establishing (106), by the server of the second application, a second login state of the user in the second application according to the first login state;
associating and storing (106), by the server of the second application, the device identifier information and the second login state;
establishing (201), by the server of the second application, a corresponding relation between the first login state and the second login state, the relation between the first login state and the second login state allowing the server of the second application to determine (204), whether the first login state and the second login state are valid;
receiving (108), by the server of the second application, an application access request for the second application from the user login device; and
upon receipt, by the server of the second application, of the application access request:
determining whether identifier information of the user login device sending the application access request and a corresponding second login state have been stored, and
in response to determining that identifier information of the user login device sending the application access request and a corresponding second login state have been stored:
sending (202) a validity query request for the first login state to the server of the first application,
determining (204), by the server of the second application, whether the first login state and the second login state are valid, and
in response to determining, by the server of the second application, that the first login state and the second login state are valid, returning (111) an application access response, by the server of the second application to the user login device.

2. The method of claim 1, wherein obtaining device identifier information of the user login device comprises generating (104) the device identifier information according to device information and login information.

3. The method of claim 1, wherein after sending the device identifier information and the first login state to the server of the second application, the method further comprises:
receiving, by the server of the first application, a validity query request (202) for the first login state sent by the server of the second application; and
feeding (203), by the server of the first application, a validity of the first login state back to the server.

4. The method of claim 1, wherein sending (105), by the server of the first application, the first login state to the server of the second application comprises sending information indicating that the user has logged into the first application.

5. A trusted login system, comprising:
a server of a first application; and
a server of a second application, wherein the second application is a trusting login application that trusts the first application in that after a respective user logs into the first application, the respective user can access the second application; wherein
the server of the first application comprises:
a login state generation module (31) configured to obtain device identifier information of a user login device after a first login state of a user in a first application is established, the device identifier information uniquely identifying the user login device, wherein the first login state is recorded login information that represents that the user has logged into the first application successfully, and associate the device identifier information with the first login state by the server of the first application, and
a login state synchronization module (32) configured to send (105), in response to the server of the first application determining a need for redirection from the first application to the second application, the device identifier information and the first login state, by the server of the first application, to the server of the second application; and
wherein the server of the second application comprises:
a login state receiving module (51) configured to receive the first login state and device identifier information sent (105) by the server of the first application, the first application being a trusted login application associated with the second application,
a login state establishment module (52) configured to establish (106) a second login state of the user in the second application according to the first login state, and associate and store the device identifier information and the second login state by the server of the second application, the login state establishment module (52) being further configured to establish a corresponding relation between the first login state and the second login state after the second login state of the user in the second application is established, the relation between the first login state and the second login state allowing the server of the second application to determine (204), whether the first login state and the second login state are valid, and
an access management module (53) configured to, upon receipt, by the server of the second application, of an application access request for the second application, return an application access response, by the server of the second application to the user login device sending the application access request, if it is determined that identifier information of the user login device sending the application access request and the corresponding second login state have been stored, the access management module (53) being further configured to, after it is determined that the identifier information of the device sending the application access request and the corresponding second login state have been stored, and before returning the application access response, send a validity query request for the first login state to the server, and determine that the first login state and the second login state are valid.

6. The system of claim 5, wherein,
when obtaining the device identifier information of the user login device, the login state generation module (31) is specifically configured to generate (104) the device identifier information according to device information and login information.

7. The system of claim 5, wherein the server of the first application further comprises:
a login state management module (33) configured to receive (202) a validity query request for the first login state sent by the server of the second application, and to feed (203) a validity of the first login state back to the server of the second application.

8. The system of claim 5, wherein sending (105), by the server of the first application, the first login state to the server of the second application comprises sending information indicating that the user has logged into the first application.

## Patentansprüche

1. Verfahren für vertrauenswürdiges Anmelden, umfassend:
Herstellen (103), durch einen Server einer ersten Anwendung, eines ersten Anmeldestatus eines Benutzers in der ersten Anwendung;
Erhalten, durch den Server der ersten Anwendung, von Gerätekennungsinformationen des Anmeldegeräts des Benutzers, nachdem der erste Anmeldestatus hergestellt wurde, wobei die Gerätekennungsinformationen das Anmeldegerät des Benutzers eindeutig identifizieren, wobei der erste Anmeldestatus aufgezeichnete Anmeldeinformationen sind, die zeigen, dass der Benutzer sich erfolgreich bei der ersten Anwendung angemeldet hat;
Zuordnen der Gerätekennungsinformationen zu dem ersten Anmeldestatus durch den Server der ersten Anwendung;
Bestimmen, durch den Server der ersten Anwendung, einer Notwendigkeit für eine Umleitung von der ersten Anwendung zu einer zweiten Anwendung;
Senden (105), durch den Server der ersten Anwendung, der Gerätekennungsinformationen und des ersten Anmeldestatus, durch den Server der ersten Anwendung, an einen Server der zweiten Anwendung:
Empfangen, durch den Server der zweiten Anwendung, des ersten Anmeldestatus und der Gerätekennungsinformationen, die von dem Server der ersten Anwendung gesendet (105) wurden, wobei die erste Anwendung eine Anwendung für vertrauenswürdiges Anmelden ist, die der zweiten Anwendung zugeordnet ist, wobei die zweite Anwendung eine Anwendung für vertrauenswürdiges Anmelden ist, die der ersten Anwendung insofern vertraut, dass nach Anmeldung eines jeweiligen Benutzers bei der ersten Anwendung der jeweilige Benutzer auf die zweite Anwendung zugreifen kann;
Herstellen, (106), durch den Server der zweiten Anwendung, eines zweiten Anmeldestatus des Benutzers in der zweiten Anwendung gemäß dem ersten Anmeldestatus;
Zuordnen und Speichern (106), durch den Server der zweiten Anwendung, der Gerätekennungsinformationen und des zweiten Anmeldestatus;
Herstellen (201), durch den Server der zweiten Anwendung, einer entsprechenden Beziehung zwischen dem ersten Anmeldestatus und dem zweiten Anmeldestatus, wobei die Beziehung zwischen dem ersten Anmeldestatus und dem zweiten Anmeldestatus es dem Server der zweiten Anwendung ermöglicht, zu bestimmen (204), ob der erste Anmeldestatus und der zweite Anmeldestatus gültig sind;
Empfangen (108), durch den Server der zweiten Anwendung, einer Anwendungszugriffsanforderung für die zweite Anwendung von dem Anmeldegerät des Benutzers; und
nach Empfang der Anwendungszugriffsanforderung durch den Server der zweiten Anwendung:
Bestimmen, ob Kennungsinformationen des Anmeldegeräts des Benutzers, das die Anwendungszugriffsanforderung sendet, und ein entsprechender zweiter Anmeldestatus gespeichert wurden, und
als Reaktion auf ein Bestimmen, dass Kennungsinformationen des Anmeldegeräts des Benutzers, das die Anwendungszugriffsanforderung sendet, und ein entsprechender zweiter Anmeldestatus gespeichert wurden:
Senden (202) einer Gültigkeitsabfrageanforderung für den ersten Anmeldestatus an den Server der ersten Anwendung,
Bestimmen (204), durch den Server der zweiten Anwendung, ob der erste Anmeldestatus und der zweite Anmeldestatus gültig sind, und
als Reaktion auf ein Bestimmen, durch den Server der zweiten Anwendung, dass der erste Anmeldestatus und der zweite Anmeldestatus gültig sind, Zurückgeben (111) einer Anwendungszugriffsantwort durch den Server der zweiten Anwendung an das Anmeldegerät des Benutzers.

2. Verfahren nach Anspruch 1, wobei das Erhalten von Gerätekennungsinformationen des Anmeldegeräts des Benutzers Erzeugen (104) der Gerätekennungsinformationen gemäß Geräteinformationen und Anmeldeinformationen umfasst.

3. Verfahren nach Anspruch 1, wobei nach einem Senden der Gerätekennungsinformationen und des ersten Anmeldestatus an den Server der zweiten Anwendung das Verfahren ferner umfasst:
Empfangen, durch den Server der ersten Anwendung, einer Gültigkeitsabfrageanforderung (202) für den ersten Anmeldestatus, die durch den Server der zweiten Anwendung gesendet wurde; und
Zurückführen (203), durch den Server der ersten Anwendung, einer Gültigkeit des ersten Anmeldestatus an den Server.

4. Verfahren nach Anspruch 1, wobei das Senden (105), durch den Server der ersten Anwendung, des ersten Anmeldestatus an den Server der zweiten Anwendung, Senden von Informationen, die angeben, dass sich der Benutzer bei der ersten Anwendung angemeldet hat, umfasst.

5. System für vertrauenswürdiges Anmelden, umfassend:
einen Server einer ersten Anwendung; und
einen Server einer zweiten Anwendung, wobei die zweite Anwendung eine Anwendung für vertrauenswürdiges Anmelden ist, die der ersten Anwendung insofern vertraut, dass nach einer Anmeldung eines jeweiligen Benutzers bei der ersten Anwendung der jeweilige Benutzer auf die zweite Anwendung zugreifen kann; wobei
der Server der ersten Anwendung umfasst:
ein Anmeldestatus-Erzeugungsmodul (31), das dazu ausgelegt ist, Gerätekennungsinformationen eines Anmeldegeräts des Benutzers zu erhalten, nachdem ein erster Anmeldestatus eines Benutzers in einer ersten Anwendung hergestellt wurde, wobei die Gerätekennungsinformationen das Anmeldegerät des Benutzers eindeutig identifizieren, wobei der erste Anmeldestatus Anmeldeinformationen aufzeichnet, die zeigen, dass sich der Benutzer erfolgreich bei der ersten Anwendung angemeldet hat, und die Gerätekennungsinformationen durch den Server der ersten Anwendung dem ersten Anmeldestatus zugeordnet werden, und
ein Anmeldestatus-Synchronisationsmodul (32), das dazu ausgelegt ist, als Reaktion darauf, dass der Server der ersten Anwendung eine Notwendigkeit für eine Umleitung von der ersten Anwendung zu einer zweiten Anwendung bestimmt, die Gerätekennungsinformationen und den ersten Anmeldestatus durch den Server der ersten Anwendung an den Server der zweiten Anwendung zu senden (105); und
wobei der Server der zweiten Anwendung umfasst:
ein Anmeldestatus-Empfangsmodul (51), das dazu ausgelegt ist, den ersten Anmeldestatus und die Gerätekennungsinformationen zu empfangen, die vom Server der ersten Anwendung gesendet (105) wurden, wobei die erste Anwendung eine Anwendung für vertrauenswürdiges Anmelden ist, die der zweiten Anwendung zugeordnet ist;
ein Anmeldestatus-Herstellungsmodul (52), das dazu ausgelegt ist, einen zweiten Anmeldestatus des Benutzers in der zweiten Anwendung gemäß dem ersten Anmeldestatus herzustellen (106), und die Gerätekennungsinformationen und den zweiten Anmeldestatus durch den Server der zweiten Anwendung zuzuordnen und zu speichern, wobei das Anmeldestatus-Herstellungsmodul (52) ferner dazu ausgelegt ist, eine entsprechende Beziehung zwischen dem ersten Anmeldestatus und dem zweiten Anmeldestatus herzustellen, nachdem der zweite Anmeldestatus des Benutzers in der zweiten Anwendung hergestellt wurde, wobei die Beziehung zwischen dem ersten Anmeldungsstatus und dem zweiten Anmeldestatus es dem Server der zweiten Anwendung ermöglicht, zu bestimmen (204), ob der erste Anmeldestatus und der zweite Anmeldestatus gültig sind, und
ein Zugriffsverwaltungsmodul (53), das dazu ausgelegt ist, bei Empfang, durch den Server der zweiten Anwendung, einer Anwendungszugriffsanforderung für die zweite Anwendung, durch den Server der zweiten Anwendung eine Anwendungszugriffsantwort an das Anmeldegerät des Benutzers, das die Anwendungszugriffsanforderung sendet, zurückzugeben, wenn bestimmt wird, dass Kennungsinformationen des Anmeldegeräts des Benutzers, das die Anwendungszugriffsanforderung sendet, und der entsprechende zweite Anmeldestatus gespeichert wurden, wobei das Zugriffsverwaltungsmodul (53) ferner dazu ausgelegt ist, nachdem bestimmt wurde, dass die Kennungsinformationen des Geräts, das die Anwendungszugriffsanforderung sendet, und der entsprechende zweite Anmeldestatus gespeichert wurden, und vor einem Zurückgeben der Anwendungszugriffsantwort, eine Gültigkeitsabfrageanforderung für den ersten Anmeldestatus an den Server zu senden, und zu bestimmen, dass der erste Anmeldestatus und der zweite Anmeldestatus gültig sind.

6. System nach Anspruch 5, wobei,
wenn die Gerätekennungsinformationen des Anmeldegeräts des Benutzers erhalten werden, das Anmeldestatus-Erzeugungsmodul (31) speziell dazu ausgelegt ist, die Gerätekennungsinformationen gemäß Geräteinformationen und Anmeldeinformationen zu erzeugen (104).

7. System nach Anspruch 5, wobei der Server der ersten Anwendung ferner umfasst:
ein Anmeldestatus-Verwaltungsmodul (33), das dazu ausgelegt ist, eine Gültigkeitsabfrageanforderung für den ersten Anmeldestatus, der vom dem Server der zweiten Anwendung gesendet wurde, zu empfangen (202), und eine Gültigkeit des ersten Anmeldestatus an den Server der zweiten Anwendung zurückzuführen (203).

8. System nach Anspruch 5, wobei das Senden (105), durch den Server der ersten Anwendung, des ersten Anmeldestatus an den Server der zweiten Anwendung Senden von Informationen, die angeben, dass sich der Benutzer bei der ersten Anwendung angemeldet hat, umfasst.

## Revendications

1. Procédé de connexion sécurisée comprenant :
l'établissement (103), par un serveur d'une première application, d'un premier état de connexion d'un utilisateur dans la première application ;
l'obtention, par le serveur de la première application, informations d'identifiant de dispositif du dispositif de connexion d'utilisateur après l'établissement du premier état de connexion, les informations d'identifiant de dispositif identifiant de manière unique le dispositif de connexion d'utilisateur, le premier état de connexion consistant en informations de connexion enregistrées qui montrent que l'utilisateur s'est connecté à la première application avec succès, et l'association des informations d'identifiant de dispositif au premier état de connexion par le serveur de la première application ;
la détermination, par le serveur de la première application, d'une nécessité de rediriger la première application vers la seconde application ;
l'envoi (105), par le serveur de la première application, des informations d'identifiant de dispositif et du premier état de connexion, par le serveur de la première application, à un serveur de la seconde application ;
la réception, par le serveur de la seconde application, du premier état de connexion et des informations d'identifiant de dispositif envoyés (105) par le serveur de la première application, la première application étant une application de connexion sécurisée associée à la seconde application, dans lequel la seconde application est une application de connexion de sécurisation qui sécurise la première application en ce qu'après la connexion d'un utilisateur respectif à la première application, l'utilisateur respectif peut accéder à la seconde application ;
l'établissement (106), par le serveur de la seconde application, d'un second état de connexion de l'utilisateur dans la seconde application conformément au premier état de connexion ;
l'association et la mémorisation (106), par le serveur de la seconde application, des informations d'identifiant de dispositif et du second état de connexion ;
l'établissement (201), par le serveur de la seconde application, d'une relation correspondante entre le premier état de connexion et le second état de connexion, la relation entre le premier état de connexion et le second état de connexion permettant au serveur de la seconde application de déterminer (204) que le premier état de connexion et le second état de connexion sont valides ou non ;
la réception (108), par le serveur de la seconde application, d'une requête d'accès d'application portant sur la seconde application à partir du dispositif de connexion d'utilisateur ; et
lors de la réception, par le serveur de la seconde application, de la requête d'accès d'application :
la détermination que des informations d'identifiant du dispositif de connexion d'utilisateur qui envoie la requête d'accès d'application et un second état de connexion correspondant ont été mémorisés ou non, et
en réponse à la détermination que des informations d'identifiant du dispositif de connexion d'utilisateur qui envoie la requête d'accès d'application et un second état de connexion correspondant ont été mémorisés :
l'envoi (202) d'une requête d'interrogation de validité pour le premier état de connexion au serveur de la première application,
la détermination (204), par le serveur de la seconde application, que le premier état de connexion et le second état de connexion sont valides ou non, et
en réponse à la détermination, par le serveur de la seconde application, que le premier état de connexion et le second état de connexion sont valides, le renvoi (111) d'une réponse d'accès d'application, par le serveur de la seconde application au dispositif de connexion d'utilisateur.

2. Procédé selon la revendication 1, dans lequel l'obtention des informations d'identifiant de dispositif du dispositif de connexion d'utilisateur comprend la génération (104) des informations d'identifiant de dispositif conformément à des informations de dispositif et des informations de connexion.

3. Procédé selon la revendication 1, le procédé comprenant en outre après l'envoi des informations d'identifiant de dispositif et du premier état de connexion au serveur de la seconde application :
la réception, par le serveur de la première application, d'une requête d'interrogation de validité (202) pour le premier état de connexion envoyé par le serveur de la seconde application ; et
le renvoi (203), par le serveur de la première application, d'une validité du premier état de connexion au serveur.

4. Procédé selon la revendication 1, dans lequel l'envoi (105), par le serveur de la première application, du premier état de connexion au serveur de la seconde application comprend l'envoi d'informations indiquant que l'utilisateur s'est connecté à la première application.

5. Système de connexion sécurisée, comprenant :
un serveur d'une première application ; et
un serveur d'une seconde application, la seconde application étant une application de connexion de sécurisation qui sécurise la première application en ce qu'après la connexion d'un utilisateur respectif à la première application, l'utilisateur respectif peut accéder à la seconde application ; dans lequel
le serveur de la première application comprend :
un module de génération d'état de connexion (31) configuré pour obtenir des informations d'identifiant de dispositif d'un dispositif de connexion d'utilisateur après qu'un premier état de connexion d'un utilisateur dans une première application est établi, les informations d'identifiant de dispositif identifiant de manière unique le dispositif de connexion d'utilisateur, dans lequel le premier état de connexion consiste en informations de connexion enregistrées qui montrent que l'utilisateur s'est connecté à la première application avec succès, et associer les informations d'identifiant de dispositif au premier état de connexion par le serveur de la première application, et
un module de synchronisation d'état de connexion (32) configuré pour envoyer (105), en réponse à la détermination par le serveur de la première application d'une nécessité de rediriger la première application vers la seconde application, les informations d'identifiant de dispositif et le premier état de connexion, par le serveur de la première application, au serveur de la seconde application ; et
dans lequel le serveur de la seconde application comprend :
un module de réception d'état de connexion (51) configuré pour recevoir le premier état de connexion et des informations d'identifiant de dispositif envoyés (105) par le serveur de la première application, la première application étant une application de connexion sécurisée associée à la seconde application,
un module d'établissement d'état de connexion (52) configuré pour établir (106) un second état de connexion de l'utilisateur dans la seconde application conformément au premier état de connexion, et associer et mémoriser les informations d'identifiant de dispositif et le second état de connexion par le serveur de la seconde application, le module d'établissement d'état de connexion (52) étant configuré en outre pour établir une relation correspondante entre le premier état de connexion et le second état de connexion après l'établissement du second état de connexion de l'utilisateur dans la seconde application, la relation entre le premier état de connexion et le second état de connexion permettant au serveur de la seconde application de déterminer (204) que le premier état de connexion et le second état de connexion sont valides ou non, et
un module de gestion d'accès (53) configuré pour, à la réception, par le serveur de la seconde application, d'une requête d'accès d'application portant sur la seconde application, renvoyer une réponse d'accès d'application, par le serveur de la seconde application au dispositif de connexion d'utilisateur qui envoie la requête d'accès d'application, s'il est déterminé que des informations d'identifiant du dispositif de connexion d'utilisateur qui envoie la requête d'accès d'application et le second état de connexion correspondant ont été mémorisés, le module de gestion d'accès (53) étant configuré en outre pour, après la détermination que les informations d'identifiant du dispositif qui envoie la requête d'accès d'application et le second état de connexion correspondant ont été mémorisés, et avant le renvoi de la réponse d'accès d'application, envoyer une requête d'interrogation de validité pour le premier état de connexion au serveur, et déterminer que le premier état de connexion et le second état de connexion sont valides.

6. Système selon la revendication 5, dans lequel,
lors de l'obtention des informations d'identifiant de dispositif du dispositif de connexion d'utilisateur, le module de génération d'état de connexion (31) est configuré spécifiquement pour générer (104) les informations d'identifiant de dispositif conformément aux informations de dispositif et informations de connexion.

7. Système selon la revendication 5, dans lequel le serveur de la première application comprend en outre :
un module de gestion d'état de connexion (33) configuré pour recevoir (202) une requête d'interrogation de validité pour le premier état de connexion envoyé par le serveur de la seconde application, et renvoyer (203) une validité du état de connexion au serveur de la seconde application.

8. Système selon la revendication 5, dans lequel l'envoi (105), par le serveur de la première application, du premier état de connexion au serveur de la seconde application comprend l'envoi d'informations indiquant que l'utilisateur s'est connecté à la première application.
